# EUROPEAN PATENT SPECIFICATION

(11) **EP 0 943 080 B1**
(45) Date of publication and mention of the grant of the patent: **15.10.2003**
(21) Application number: 97946744.6
(22) Date of filing: 04.12.1997
(51) Int. Cl.: G01M 3/16

(54) **A MOISTURE SENSING MEMBRANE AND A METHOD OF DETECTING MOISTURE**
VERFAHREN UND MEMBRAN ZUR ERFASSUNG VON FEUCHTIGKEIT
MEMBRANE CAPTANT L'HUMIDITE ET PROCEDE DE DETECTION DE L'HUMIDITE

(30) Priority: 06.12.1996 DK 139796
(43) Date of publication of application: 22.09.1999
(73) Proprietor: Icopal A/S, 2730 Herlev (DK)
(72) Inventor: HARDER, Sven, DK-2625 Vallensbaek (DK)
(74) Representative: Sundien, Thomas
(86) International application number: DK9700552
(87) International publication number: WO98025119

(56) References cited:
- EP-A- 0 341 932
- EP-A- 0 341 934
- WO-A-85/00188
- DE-A- 3 011 500
- DE-A- 4 013 990

## Description

The present invention relates to a membrane for use as a moisture sensing element. The invention further relates to a method of detecting and locating intrusion of moisture at a surface.

Moisture and the prevention of excessive concentrations of moisture represent an old discipline within the building science. Excessive concentrations of moisture may occur due to a number of causes. Construction materials emit moisture per se, cracks, openings and various defects in the building elements may be present or may arise over time causing rain water, water from the underground or water from utility installations to permeate into the zones of the building construction other than those where the construction is designed to tolerate it. Moisture accumulations often occur in hidden places, and a leakage may exist for a long time and cause considerable accumulation of moisture and perhaps moisture damage over extensive areas before the problem is noticed. The moisture may also travel widely about within inaccessible sections of the building, thereby making it difficult to locate the leakage.

It is a general practice to structure a building with a shell comprising a layer of insulating material, the exterior side of said shell comprising a form of climatic shield, e.g. a roof or face covering, whereas the interior side facing accomodation quarters is provided with a vapour impervious membrane. The purpose of the vapour impervious membrane is to prevent the relatively warm room air from permeating into the insulation, in which the decreasing temperature will cause an increase in the relative moisture content of the air and possibly condensation of moisture.

In practice it is difficult to obtain a completely vapour impervious membrane, and expected is therefore some conveyance of moisture from the interior of the building out into the insulation, for which reasons precautions, such as ventilation or drainage of the areas comprising insulation, have to be taken. These measures are not always accomplished; and normally they are not capable of draining off large amounts of moisture, which may occur e.g. in case of imperfections in the roof or the like.

EP patent No. 148 870 discloses a vapour barrier comprising two vapour-tight layers and a water-absorbing layer interposed therebetween, each vapour tight layer being provided with openings and the openings of one layer being displaced laterally relatively to the openings of the other layer. This vapour barrier offers a high resistance to the diffusion of water vapour through the vapour barrier from one side towards the other, but nevertheless allows condensed water formed on the other side of the vapour barrier to travel in the opposite direction to be evaporated from the first mentioned side. Thus this vapour barrier is capable of conveying small amounts of water away from the area comprising the insulation and of draining off the water by evaporation towards the interior of the building.

DE patent No. 3 011 500 discloses a device for leakage monitoring and for locating a leakage point in the water-tight outer covering of a building, which device mainly comprises a cable with two indicator cores comprising an interposed insulation, in which device an increased moisture content will give rise to an electric transition between the indicator cores in order that moisture can be detected by measuring the resistance between the indicator cores. Furthermore the disclosure indicates how the resistance along an indicator core before and after a transition point can be measured by means of an electric bridge circuit, thus allowing the distance to the transition point to be determined. It is suggested that the cable be disposed in the roof of a building on top of the vapour barrier and below the layer of insulation.

In principle a system of this kind may be capable of detecting and locating accumulated moisture. A use as the one suggested is, however, questionable as to providing any useful guidance regarding the location of the moisture entry point. In case of a leakage in the upper membrane of the roof, water is likely to permeate through the layer of insulation until it meets the vapour barrier which will stem the water and carry it off along any slope of the top side to the lowest point of the vapour barrier where it accumulates. It may be that the path followed by the water does not pass the cable, in which case it will not be detected. Should the water anyway be detected, the detection is likely to be related to the point of accumulation, and thus the determination of location obtainable by the system is more likely to represent the lowest point of the vapour barier.

In the case where the hollow spaces accomodating the insulation within the roof contain a certain amount of moisture, this moisture will travel alternately up and down dependent on the temperature gradient prevailing at any instant, which gradient may alternate between opposite directions dependent on changing climatic conditions. If the top side of the roof is heated e.g. by sun light, this may cause an evaporation of moisture from the bottom side of the roof top layer, a downward diffusion of moist air and a condensation of water in the lowermost part of the insulation right above the vapour barrier, which in this case is the coldest spot. The moment the roof is cooled down due to low ambient temperature, the direction of moisture transport is reversed. Conditions like intermittent sun incidence may therefore result in occasional moisture alarm.

European patent application No. 341 932 discloses a leakage sensor comprising a tape provided with two parallel electrical conductor strips in contact with a material which is capable of absorbing liquid and which forms an electric transition between the conductors in case of any liquid present so that moisture can be detected. No determination of location is mentioned.

According to an aspect of the invention there is provided a membrane as stated in claim 1.

This membrane is capable of conveying limited amounts of liquid from one side to the other without carrying it off on the top surface and at the same time of serving as a transducer for the purpose of detecting moisture in such manner as to provide an alarm in case the entry of liquid surpasses the transporting capacity of the membrane. The membrane provides effective area coverage, picking up incipient water everywhere. Intruding water spreads laterally inside the membrane, thereby substantially widening the zone effectively covered by one pair of conductors, even beyond the conductor interspacing.

Small amounts of moisture will be drained off by condensation and evaporation, typically towards the interior of the building, and do not trigger an alarm before the amount exceeds a predetermined threshold value. This provides a more genuine leakage detection, i.e. a detection which to a higher extent is correlated to the entry of moisture than anything offered by the prior art. In the typical case where a leakage gradually builds up over time, the moisture transporting capacity of the membrane will permit an early detection in order to direct attention to the problem before the leakage has escalated to a stage where water leaves the membrane to pass into the interior of the building.

According to an expedient embodiment the electrical conductors are arranged in such a manner that the zone of electric transition between the conductors can be determined through measurement of the electric resistance in sections of one of the conductors located on one and on the other side, respectively, of the transition zone. In this manner a linear determination of location is obtained so that based on a knowledge of the course of the conductor the transition zone can be located. The measurement of resistance values may e.g. be effected by means of an electric bridge circuit, which accomplishes the purpose that the transition resistance through the moist section of the material does not disturb the determination of location through measurement of the resistance in sections of the conductor.

The electrical conductors proper may be implemented in the form of embedded resistance foil strips, coatings or resistance wires, or the vapour impervious layers may be made of electrically conductive material which is divided into suitable strips.

According to expedient embodiments the electrical conductors are so arranged that they are shielded on one side or on both sides of the membrane by the vapour impervious layers. This provides a mechanical shield and a shield against direct drip, preventing a premature reaction due to a localized influence so that moisture will not be detected until it has reached a level where it causes an increase in moisture content in a more significant area of the membrane.

According to an expedient embodiment the vapour impervious layers shielding the conductors comprise an electrically insulative material. This prevents accidental short circuiting as might otherwise happen in case the membrane touches an electrically conductive body, and minimizes the risk of unwarranted indication due to surface effects, such as the accidental presence of coatings or deposits of conductive matter, is reduced.

The amount of moisture necessary for forming a transition between the conductor strips depends on properties, such as the water absorption capacity of the material, and the actual amount may easily be determined by experimentation. Tests may further determine how far moisture will spread in the membrane without resulting in dripping of liquid. This information is utilized for selecting the mutual spacing between the conductor strips and between pairs of conductor strips so as to ensure an effective moisture detection coverage over the entire surface.

According to an expedient embodiment the two conductors comprise strips or wires of a non-corroding resistance material which is embedded in contact with the water absorbing layer. This embodiment is advantageous from a manufacturing point of view, and the two conductor strips are readily accessed and connected to the measuring equipment for the electrical measurements.

According to another aspect of the invention there is further provided a method as stated in claim 10.

Thus there is provided a method of detecting and locating moisture intrusion which offers the same advantages as those mentioned above. The surface to which the method is applied may be a climatic shielding of a building, such as a roof or an exterior wall, or it may be a floor surface or the like. The membrane is disposed along the surface, i.e. the membrane is arranged adjacent to the surface or spaced therefrom, e.g. on the opposite side of a spacing, a wall or a body of insulating material. If the spacing or the intermediate layer allows any moisture to spread, the moisture detection will still be effective in sensing moisture intrusion through the surface; only the spacing or the intermediate layer may cause the detection to be delayed by the period of time it takes for the moisture content to be conveyed to the membrane; and the location of moisture intrusion may be less precise with increased spacing.

Expedient embodiments of this method will appear from the method sub-claims.

The invention will appear in further detail from the following detailed description of a preferred embodiment given with reference to the drawings in which
Figure 1 is a sectional view of a membrane according to a first embodiment of the invention arranged below a roof,
Figure 2 is a sectional view of a membrane according to a second embodiment of the invention,
Figure 3 is a block diagram of the electric circuit used for determining the presence of moisture in a membrane, and
Figure 4 is an electric diagram of an electric circuit used for determining the location of moisture intrusion.

All the figures are schematic and simplified so that only details considered important to enable those skilled in the art to carry out the invention are shown, whereas other details are omitted for reasons of clarity. All figures use the same reference numerals about identical or corresponding parts.

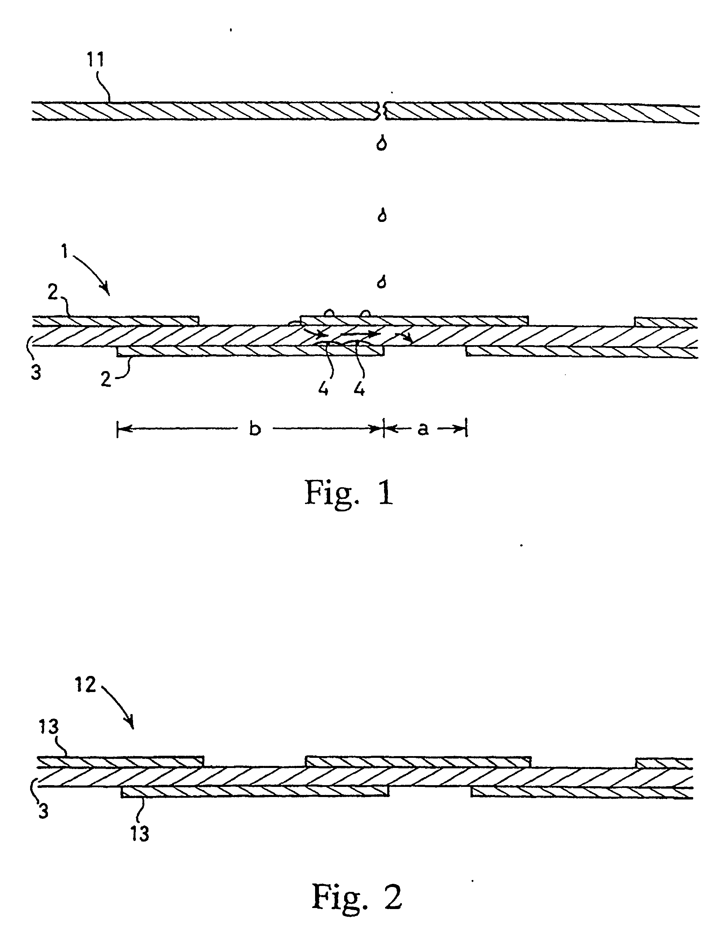

Reference is first made to Figure 1 showing a sectional view of a portion of a membrane web 1 according to a first embodiment of the invention and arranged below a roof 11. This membrane web 1 comprises a core 3 of a water-absorbing material covered on each side with a vapour impervious foil 2. As suggested in Figure 1 this vapour impervious foil 2 is provided with openings in certain areas in such a manner that the openings on one side of the core are displaced laterally in the plane of the membrane in relation to the openings on the other side of the core.

In the preferred embodiment the vapour impervious foil 2 is implemented in the form of laterally spaced tapes so that the tape interspacings provide foil openings. Designating the width of the tapes by b, the width of the spacing by a, and staggering the tapes on one side relative to those on the opposite side so that each of the tapes are positioned centrally vis-a-vis a respective spacing on the opposite side, it may be deduced that the overlapping areas in which the core is covered on both sides have the width (b-a)/2. In a presently preferred embodiment of the web, b is 17 cm and a is 7 cm, from which the width of the overlapping area may be computed to be 5 cm.

In a preferred embodiment the membrane web is manufactured with a width of 1.25 m and with a number of parallel longitudinal foil tapes distributed regularly over the width. Any number of membrane webs may be combined, e.g. in a building structure, by being disposed in parallel manner with a small overlapping of the edges for covering a larger surface.

The core is made of a non-woven product on the basis of synthetic fibres, e.g. polypropylene fibres arranged in a felt-like structure. The core may have a thickness of 0.25 mm.

The vapour impervious foil may comprise a polyolefin plastic film, e.g. of a thickness of 20 µm. A membrane web thus formed is diffusion-tight but is capable of conveying liquid absorbed on side side and of discharging it as vapour or condensate on the other side.

As shown in Figure 1 the underside of the core of this material comprises two indicator wires 4 embedded so as to be located in an area where they are covered by the strips of vapour impervious foil. In a preferred embodiment the resistance conductors may comprise kanthal wire of a diameter of 0.2 mm and with a resistance of e.g. 45 ohm per meter, and the conductors may be spaced 1 cm apart. The spacing between the conductor pairs is decided in consideration of the liquid distribution capacity of the core. In a preferred embodiment this spacing may be 1.2 m.

Reference is now made to Figure 2 showing a membrane web 12 according to a second embodiment of the invention. This membrane web comprises a core 3 of the same type as the one above, the second embodiment being distinguished by the vapour impervious foil which in this case comprises an electrically conductive foil 13. In preferred embodiments this foil may comprise a plastic material provided with a conductive coating or it may comprise an aluminium foil.

In the embodiment of Figure 2 the resistance is measured between two of the foil webs 13, which could be two foil webs on opposite sides, or two adjacent foil webs on the same side of the core.

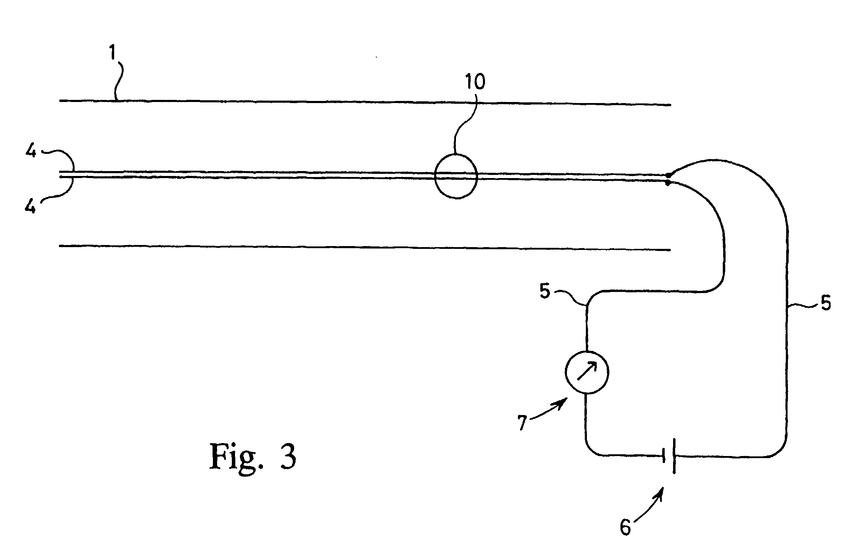

Reference is now made to Figure 3 for a description of the electric circuit used for the detection of moisture. As suggested in principle in Figure 3, electrical wires 5 connect the indicator wires 4 to a measuring means schematically suggested by a voltage generator 6 and an amperemeter 7. In this circuit the insulative resistance from one indicator wire to another is measured. The circuit in Figure 3 makes it possible to measure the value of the resistance which gives an quantitative indication regarding the extent of an area 10 of increased moisture content. For most uses it may prove satisfactory to omit the measurement of the transition resistance value and merely to install a comparator means programmed to compare the resistance value to a fixed alarm threshold value and to trigger an alarm when the resistance value drops below the threshold value. Tests have established that the use of a value of 10 megaohm as a threshold value provides appropriate indications.

For those skilled in the art it will be obvious how to carry out the resistance measurement by using other forms of circuits than the one explained above. It is also within the scope of the invention to monitor and log the resistance value continuously and to process the data collected in this manner, and optionally to correlate the collected data with data about climatic conditions.

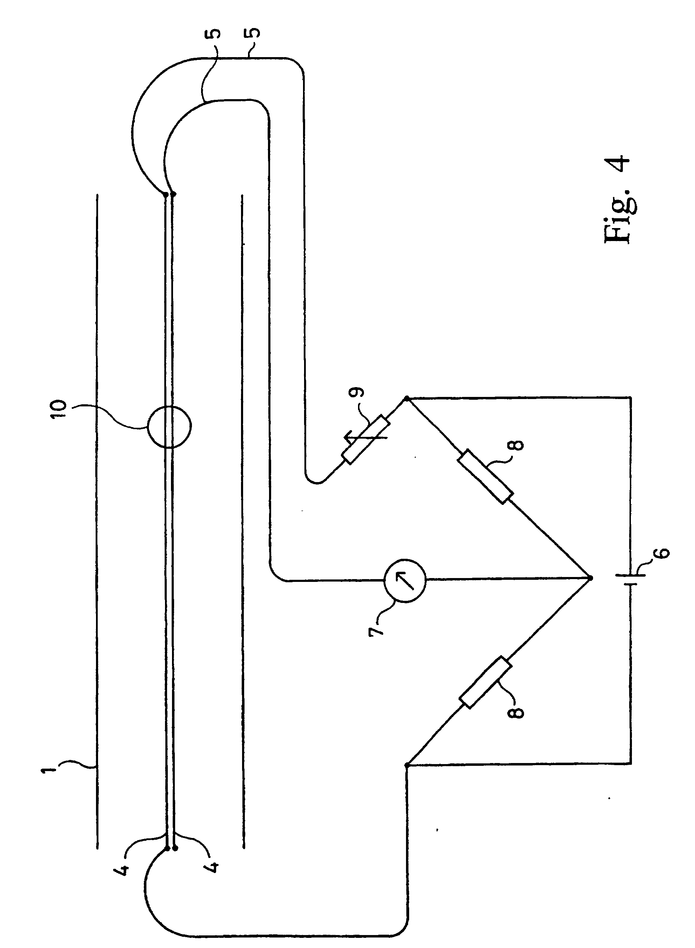

Reference is now made to Figure 4 for an illustration of a circuit which may be used for locating a zone containing moisture. The circuit in Figure 4 comprises a bridge circuit having a voltage generator 6 which feeds two branches of a bridge. One of the branches comprises two fixed resistors 8 and the other comprises a first indicator wire 4 series-connected to a vario resistor 9 which is arranged so that the set resistance value may be read. One terminal of the instrument 7 is connected to the central junction point of the first branch of the bridge and the other terminal is connected to one end of the neighbouring indicator wire within the conductor pair. The zone of moisture creates an electrical connection which effectively provides a junction between the indicator wires, connecting the other terminal of the instrument, through part of the neighbouring wire, to the first indicator wire at this point. The transition resistance in the area 10 of increased moisture content is electrically connected in series with the instrument.

This circuit is capable of conducting a substantial level of current longitudinally through one of the indicator wires, while the vario resistor 9 can be tuned until the level of current through the instrument has been brought to a minimum. When this is the case, the set value of the vario resistor 9 is read and the ratio of the resistance values in the respective sections of one of the indicator strips on one and the other side, respectively, of the location of the moisture zone 10 can be calculated. The ratio of these resistance values correspond to the ratio of the lengths of the indicator strip sections on one and on the other side of the moisture zone.

Even though concrete embodiments of the invention have been described above, it is clear that this does not exclude the invention from being varied or implemented in other manners within the scope defined by the appended claims.

## Claims

1. A membrane (1) for use as a moisture sensing element and comprising a moisture absorbing core (3), which core is adapted for responding to the absorption of moisture by a change in electrical properties, and which core is covered on both sides by respective liners, each liner (2,13) being provided with openings and being substantially moisture-impervious between the openings, wherein the openings of one of the liners are displaced relative to the openings of the opposite liner in order that any passage open to moisture across the membrane through the core is lengthened substantially relative to the shortest distance across the membrane, and at least one pair of electrical conductors (4) placed so as to pick up said change in electrical properties.

2. The membrane according to claim 1, **characterized in that** said change in electrical properties comprises an increase in electrical conductivity in response to an increase in moisture content.

3. The membrane according to claim 1, **characterized in that** said electrical conductors are placed in face contact with said core.

4. The membrane according to claim 1, **characterized in that** at least one of said electrical conductors comprises an electrically resistive material in order that a zone of increased electrical conductivity between the conductors may be located by a measurement of respective electric resistance values along the respective conductor between said zone and each end of the conductor.

5. The membrane according to claim 1, **characterized in that** said electrical conductors are shielded to at least one side by one of said liners.

6. The membrane according to claim 5, **characterized in that** said pair of electrical conductors and the part of the core delimited by them are shielded to both sides by the combination of said liners.

7. The membrane according to claim 1, **characterized in that** at least one of said liners comprises an electrically insulative material.

8. The membrane according to claim 1, **characterized in that** at least one of said liners comprises spaced, parallel foil strips, the strip interspaces providing openings.

9. The membrane according to claim 1, **characterized in that** said electrical conductors comprise strips or wires of a non-corroding material and placed in surface contact with one side of the core.

10. A method of detecting the intrusion of moisture on the inside of a covering such as a roof or a facing, comprising the steps of
- arranging adjacent the inside of the covering a membrane (1) comprising a moisture absorbing core (3), which core is adapted for responding to any absorption of moisture by a change in electrical properties, and which core is covered on both sides by respective liners, each liner (2,13) being provided with openings and being substantially moisture-impervious between the openings,
- monitoring any change in electric properties of the core due to the absorption of moisture, and
- establishing a state of moisture intrusion in case said monitoring of electric properties reveals a corresponding change.

11. The method according to claim 10, **characterized in that** said monitoring of electrical properties comprises the monitoring of electric resistance to current driven through a part of said core in order to pick up any increase in electrical conductivity caused by an increase in moisture content.

12. The method according to claim 11, **characterized in that** a state of moisture intrusion is established in case said electrical conductivity surpasses a predetermined threshold value.

13. The method according to claim 10, **characterized in that** said monitoring of electric properties is carried out using a pair of electrical conductors installed adjacent said core.

14. The method according to claim 13, **characterized in that** a measurement is carried out to establish respective electric resistance values along at least one of said conductors between a zone of increased electrical conductivity and each end of the respective conductor.

## Patentansprüche

1. Membrane (1) für den Einsatz als Feuchtigkeitserfassungselement, mit einem Feuchtigkeit absorbierenden Kern (3), welcher Kern auf die Feuchtigkeitsaufnahme mit einer Änderung der elektrischen Eigenschaften reagiert, und welcher Kern auf beiden Seiten mit je einer Deckschicht bedeckt ist, wobei jede Deckschicht (2, 3) mit Öffnungen versehen und zwischen den Öffnungen im Wesentlichen feuchtigkeitsdicht ist, wobei die Öffnungen einer der Deckschichten zu den Öffnungen der gegenüberliegenden Deckschicht versetzt sind, damit jeder feuchtigkeitsdurchlässige Durchgang über die Membrane durch den Kern hindurch im Verhältnis zur kürzesten Distanz über die Membrane wesentlich verlängert ist, und mit zumindest einem Paar von elektrischen Leitern (4), das derart angeordnet ist, daß es die Änderung der elektrischen Eigenschaften aufnimmt.

2. Membrane nach Anspruch 1, **dadurch gekennzeichnet, daß** die Änderung der elektrischen Eigenschaften die Zunahme der elektrischen Leitfähigkeit als Antwort auf den Anstieg des Feuchtigkeitsgehaltes umfasst.

3. Membrane nach Anspruch 1, **dadurch gekennzeichnet, daß** die elektrischen Leiter in Flächenkontakt mit dem Kern angeordnet sind.

4. Membrane nach Anspruch 1, **dadurch gekennzeichnet, daß** zumindest einer der elektrischen Leiter ein elektrisches Widerstandsmaterial aufweist, so daß eine Zone höherer elektrischer Leitfähigkeit zwischen den Leitern durch eine Messung der entsprechenden elektrischen Widerstandswerte entlang dem entsprechenden Leiter zwischen der Zone und jedem Ende des Leiters lokalisiert werden kann.

5. Membrane nach Anspruch 1, **dadurch gekennzeichnet, daß** die elektrischen Leiter zumindest nach einer Seite von einer der Deckschichten abgeschirmt sind.

6. Membrane nach Anspruch 5, **dadurch gekennzeichnet, daß** das Paar von elektrischen Leitern und der von diesen abgegrenzte Teil des Kerns nach beiden Seiten durch eine Kombination der Deckschichten abgeschirmt sind.

7. Membrane nach Anspruch 1, **dadurch gekennzeichnet, daß** zumindest eine der Deckschichten ein elektrisches Isolationsmaterial aufweist.

8. Membrane nach Anspruch 1, **dadurch gekennzeichnet, daß** zumindest eine der Deckschichten beabstandete, parallele Folienstreifen aufweist, wobei die Zwischenräume zwischen den Streifen Öffnungen bilden.

9. Membrane nach Anspruch 1, **dadurch gekennzeichnet, daß** die elektrischen Leiter, Streifen oder Drähte eines korrosionsbeständigen Materials aufweisen und in Oberflächenkontakt mit einer Seite des Kernes angeordnet sind.

10. Verfahren zum Erfassen des Eindringens von Feuchtigkeit in das Innere einer Abdeckung, wie ein Dach oder eine Deckschicht, mit den Schritten
- Anordnen einer an das Innere einer Deckschicht angrenzenden Membrane (1) mit einem Feuchtigkeit absorbierenden Kern (3), welcher Kern auf die Feuchtigkeitsaufnahme mit einer Änderung der elektrischen Eigenschaften antwortet, und der Kern auf beiden Seiten mit je einer Deckschicht (2, 13) bedeckt ist, wobei jede Deckschicht mit Öffnungen versehen ist und im Wesentlichen zwischen den Öffnungen feuchtigkeitsdicht ist.
- Überwachung jeder durch Feuchtigkeitsaufnahme bedingten Änderung der elektrischen Eigenschaften des Kernes, und
- Feststellen eines Feuchtigkeitseindringzustandes, falls die Überwachung der elektrischen Eigenschaften eine entsprechende Änderung anzeigt.

11. Verfahren nach Anspruch 10, **dadurch gekennzeichnet, daß** das Überwachen der elektrischen Eigenschaften das Überwachen des elektrischen Widerstandes des durch einen Teil des Kernes fließenden Stromes umfaßen, um die Zunahme der elektrischen Leitfähigkeit durch den Anstieg des Feuchtigkeitsgehaltes aufzunehmen.

12. Verfahren nach Anspruch 11, **dadurch gekennzeichnet, daß** der Feuchtigkeitseindringzustand angezeigt wird, falls die elektrische Leitfähigkeit einen vordefinierten Schwellwert überschreitet.

13. Verfahren nach Anspruch 10, **dadurch gekennzeichnet, daß** das Überwachen der elektrischen Eigenschaften durch den Einsatz eines Paares elektrischer Leiter ausgeführt wird, welche an den Kern angrenzend angeschlossen sind.

14. Verfahren nach Anspruch 13, **dadurch gekennzeichnet, daß** eine Messung ausgeführt wird, um einen entsprechenden elektrischen Widerstandswert entlang zumindest eines der Leiter zwischen einer Zone erhöhter elektrischen Leitfähigkeit und jedem Ende des entsprechenden Leiters festzustellen.

## Revendications

1. Membrane (1) pour utilisation comme élément de détection d'humidité et comprenant un noyau (3) absorbant l'humidité, ce noyau étant apte à répondre à l'absorption d'humidité par un changement dans les propriétés électriques, et ce noyau est recouvert sur les deux côtés par des revêtements respectifs, chaque revêtement (2, 13) étant pourvu d'ouvertures et étant sensiblement imperméable à l'humidité entre les ouvertures, où les ouvertures d'un des revêtements sont déplacées relativement aux ouvertures du revêtement opposé pour que n'importe quel passage ouvert à l'humidité sur la membrane à travers le noyau soit allongé sensiblement relativement à la distance la plus courte sur la membrane, et au moins une paire de conducteurs électriques (4) placée de manière à détecter ledit changement dans les propriétés électriques.

2. Membrane selon la revendication 1, **caractérisée en ce que** ledit changement dans les propriétés électriques comprend une augmentation de la conductivité électrique en réponse à une augmentation de la teneur en humidité.

3. Membrane selon la revendication 1, **caractérisée en ce que** lesdits conducteurs électriques sont placés en contact de face avec ledit noyau.

4. Membrane selon la revendication 1, **caractérisée en ce qu'**au moins l'un desdits conducteurs électriques comprend un matériau électriquement résistif pour qu'une zone de plus grande conductivité électrique entre les conducteurs puisse être localisée par une mesure de valeurs de résistance électrique respectives le long du conducteur respectif entre ladite zone et chaque extrémité du conducteur.

5. Membrane selon la revendication 1, **caractérisée en ce que** lesdits conducteurs électriques sont protégés sur au moins un côté par l'un desdits revêtements.

6. Membrane selon la revendication 5, **caractérisée en ce que** ladite paire de conducteurs électriques et la partie du noyau délimitée par eux sont protégés sur les deux côtés par la combinaison desdits revêtements.

7. Membrane selon la revendication 1, **caractérisée en ce qu'**au moins l'un desdits revêtements comprend un matériau électriquement isolant.

8. Membrane selon la revendication 1, **caractérisée en ce qu'**au moins l'un desdits revêtements comprend des bandes de feuille parallèles espacées, les espaces entre les bandes constituant des ouvertures.

9. Membrane selon la revendication 1, **caractérisée en ce que** lesdits conducteurs électriques comprennent des bandes ou fils en un matériau non corrosif et sont placés en contact de surface avec un côté du noyau.

10. Procédé de détection de l'infiltration d'humidité sur le côté intérieur d'un recouvrement, comme d'un toit ou d'un parement, comprenant les étapes consistant à
- disposer d'une manière adjacente à l'intérieur du recouvrement une membrane (1) comprenant un noyau (3) absorbant l'humidité, ce noyau étant conçu pour répondre à toute absorption d'humidité par un changement dans les propriétés électriques, et ce noyau est recouvert des deux côtés par des revêtements respectifs, chaque revêtement (2, 13) présentant des ouvertures et étant sensiblement imperméable à l'humidité entre les ouvertures,
- surveiller tout changement dans les propriétés électriques du noyau dû à l'absorption de l'humidité et
- établir un état d'infiltration d'humidité dans le cas où ladite surveillance des propriétés électriques révèle un changement correspondant.

11. Procédé selon la revendication 10, **caractérisé en ce que** ladite surveillance des propriétés électriques comprend la surveillance de la résistance électrique au courant entraînée à travers une partie dudit noyau pour détecter toute augmentation dans la conductivité électrique provoquée par une augmentation de la teneur en humidité.

12. Procédé selon la revendication 11, **caractérisé en ce qu'**un état d'infiltration d'humidité est établi dans le cas où ladite conductivité électrique dépasse une valeur de seuil prédéterminée.

13. Procédé selon la revendication 10, **caractérisé en ce que** ladite surveillance des propriétés électriques est exécutée en utilisant une paire de conducteurs électriques installée d'une manière adjacente audit noyau.

14. Procédé selon la revendication 13, **caractérisé en ce qu'**une mesure est effectuée pour établir des valeurs de résistance électrique respectives le long d'au moins un desdits conducteurs entre une zone de plus grande conductivité électrique et chaque extrémité du conducteur respectif.
